# EUROPEAN PATENT SPECIFICATION

(11) **EP 1 177 143 B1**
(45) Date of publication and mention of the grant of the patent: **14.02.2007**
(21) Application number: 00903738.3
(22) Date of filing: 14.02.2000
(51) Int. Cl.: B65D 88/54

(54) **APPARATUS IN A STORE FOR SOLID MATERIAL**
VORRICHTUNG FÜR FESTSTOFFE
APPAREIL UTILISE EN ASSOCIATION AVEC UN DEPOT DE MATERIAU SOLIDE

(30) Priority: 15.02.1999 FI 990292
(43) Date of publication of application: 06.02.2002
(73) Proprietor: Raumaster OY, 26100 Rauma (FI)
(72) Inventor: SAARELA, Esko, FIN-26200 Rauma (FI)
(74) Representative: Maskula, Silla Marjatta
(86) International application number: PCT/FI2000/000102
(87) International publication number: WO 2000/048928

(56) References cited:
- DE-B- 1 088 874
- US-A- 3 438 517
- US-A- 3 989 194
- US-A- 4 126 250
- US-A- 4 167 248

## Description

The invention relates to an apparatus in a store for solid material as defined in the preamble of claim 1 below and to a method as defined in claim 10. The apparatus is intended for even distribution and prevention of sorting into portions of fuels or any other solid materials in a silo or a similar store, and for removal of said material from the silo or the like.

Solid material, such as charcoal, wood chips, sand, peat, municipal or construction waste, are often stored in various silos or other similar stores. The material to be stored is brought to the silo or the like by means appropriate for this purpose, for instance on a conveyor belt, or the material may be emptied directly into the store from a lorry, for instance. The material is removed from the silo or the like by means intended for this purpose, such as directly through an opening in the silo bottom or with the aid of a discharger placed in the silo. The discharger conveys the material to be removed towards an outlet from the store, and perhaps out of the silo in the same operation. Screw or chain dischargers, for instance, are conventionally used as such dischargers.

With a view to efficient space utilisation in the storage of solid material in a silo or the like, it is important that the material is distributed in the store as evenly as possible. Transfer of the material to be stored into a silo through the same opening each time, or bringing the material through a pipe always in the same position involves the risk of the material accumulating into high heaps in certain parts of the store. In that case, the filling of the silo or the like must be interrupted before the store is full.

In some cases it is important that the material removed from the store is as homogeneous as possible, although the stored material itself may be quite heterogeneous. This applies to various fuel silos for instance. Charcoal and peat, and especially various waste materials, consist of pieces quite different in size and density or having otherwise varying properties. However, in the combustion of such substances, it is desired that the fuel flow entering the combustion chamber is as homogeneous as possible. Pieces which differ in density, size and shape tend to sort into different portions. If the material to be stored is introduced into the silo for instance through an opening in the roof or a stationary pipe in the wall, and is then allowed to drop freely into the silo, the material will be in danger of sorting into distinct portions. Thus, materials with the higher density often tend to accumulate in the centre and at the bottom of the silo. Variations in the volume of the material flow entering the silo may also result in sorting of the material.

The period of storing the various pieces of material in a silo or any other store may vary notably. In a silo with an even bottom, for instance, from where the material is removed through an opening at the centre of the silo bottom, material located next to the wall may be totally excluded from the material circulation, at least until the silo is emptied by hand the next time.

In order to distribute the material evenly and to prevent it from sorting, various material distributors, scatterers and distributing pipes have been conventionally used. With the use of such devices, the aim is to distribute the material, such as grains, to different locations of the silo so that there will be,no heaps at any point of the store. US patent specification 3,682,394 thus proposes a rotatable distributor to be fixed to the ceiling of the silo. In addition, US patent specification 3,438,517, upon which the preamble of claim 1 is based, for instance, proposes a rotatable screw on the surface of the material in a silo for levelling the material surface. A distributor mounted in the ceiling of the silo requires a separate power source for its rotation, and a screw moved on the material surface is difficult to manufacture with a design that suits all kinds of materials, such as for instance extremely heavy ones. Distributors aiming to spread incoming material evenly in all directions, such as the solution disclosed in US patent specification 3,438,517, are not capable of distributing materials that are frequently very heterogeneous evenly all over the store. In addition, it is usually difficult to adapt the position of prior art distributors to each situation.

In order to remove material evenly from all parts of a store, it is for instance known to provide the store with several outlets, or as proposed in US patent specification 4,220,433, a screw discharger can be mounted at the bottom of a grain silo to be circulated around the bottom of the silo. This solution does not prevent sorting nor uneven distribution of the material in the silo.

DE 1088874 shows an apparatus in a silo, which apparatus comprises a material distributor supported both to a discharger below and to the sealing. US 4126250 and US 4167248 represent apparatuses for preventing bridge formation in a space, both apparatuses comprising a discharger.

The object of the present invention is to provide an apparatus which allows the prior art problems above to be minimised.

The problems above are eliminated and the objects defined above are achieved with the apparatus of the invention, which is characterised by the features defined in the characterising clause of claim 1 below.

The apparatus of the invention is characterised by comprising, in its upper part, a distributor, for instance a distributing pipe or plate, through which the material entering a silo or a similar store is guided. Said distributor is connected by means of a post or the like to a discharger located at the lower end of the apparatus of the invention, at the store bottom or in the vicinity of the bottom, the discharger having been disposed to rotate at the bottom of the silo or the like substantially in the horizontal plane, preferably as close to the horizontal plane as possible. The position of the discharger may preferably diverge from the horizontal plane, if the store bottom is not horizontal, for instance. The apparatus may naturally comprise also other parts than those mentioned above.

One chief advantage of the invention is that the material stored in a silo or a similar store is distributed as evenly as possible over the entire store area so as to allow the entire volume of the silo or the like to be efficiently utilised.

A second main advantage of the invention is that the solid material, such as solid fuel, stored in a silo or a similar store, spreads as homogeneously as possible in the entire volume of the silo or a similar store, in other words, the solution of the invention minimises sorting of the stored material.

Another major advantage of the invention is that the material to be removed from the silo or a similar store is as homogeneous as possible.

A major advantage of the invention is that the residence time of the material stored in a silo or a similar store is as regular as possible regarding the entire material quantity.

One chief advantage of the invention is its straightforward design. The material distributor and the discharger do not necessarily require separate power sources for their rotation.

One embodiment of the invention is characterised by the fact that the material distributor is supported only by a post or the like, which is connected to the discharger. In other words, the distributor is not fastened in any way to the roof structures of the silo or the like. This provides the advantage of a straightforward design. This embodiment does not require any kind of structures above the material distributor, for instance in the ceiling of the silo.

One embodiment of the invention is characterised by the fact that the material distributor and the discharger, which are interconnected with a post or the like, are adapted to rotate about a vertical axis at the same speed, so that said distributor and discharger are continually in the same position relative to each other. This can be achieved for instance by welding or bolting these said parts of the apparatus as one single piece. Such an apparatus has the advantage of allowing the levelling of the material to be further optimised and its sorting minimised, and also the charge of the power source required for rotating the device to be kept as regular as possible. At the same time, it allows for an even more straightforward design of the apparatus.

In one embodiment of the invention, the material distributor is adapted to guide substantially all of the incoming material in other directions than that of the discharger. That is at each moment into a different direction in the silo than that of the current position of the discharger, e.g. to the diametrically opposite side of the store, or evenly over almost the entire surface of the silo, but not in the direction of the discharger position. In other words, this implies a substantial portion of the incoming material, a minor portion may for instance pass by the distributor. This embodiment has the advantage of allowing the levelling and sorting of the material to be better controlled. In addition, when the silo is nearly empty, such an arrangement avoids any damage to the discharger, since the incoming material, sometimes quite heavy and hard, does not drop onto the discharger.

One conceivable embodiment of the invention in question is characterised by the fact that the material distributor is adapted to guide a substantial portion of the incoming material into a specific direction, preferably over a less than 90° sector of the horizontal cross-sectional area of the silo or the like. This involves the advantage of allowing the levelling of the material to be further optimised and its sorting to be minimised, as the distributor is capable of guiding the material entering the silo in a given, perhaps even exact, direction. In this case, the material distributor has been shaped e.g. as a tube or a trough.

In an apparatus of the invention, the position of the material distributor is horizontally adjustable, for instance about the vertical axis of the apparatus, i.e. relative to the discharge direction of the discharger. In some embodiment of the invention it may be possible to adjust the position of the distributor vertically upwards or downwards relative to the bottom of the silo or the like, or then the distributor can be inclined into the desired position. In the embodiment of the invention, it is possible to adjust the distributor position in one or more of the directions mentioned above. This yields the advantage of the position of the distributor of incoming material being adjustable as desired. This allows the material entering a silo or a similar store to be at least principally positioned under control. At the same time, the sorting can also be controlled.

In one embodiment of the invention, the position of the material distributor is adjusted by remote control from outside the silo or the like, say, from the monitoring room of an industrial plant or a power plant. Such a device involves the advantage of the positioning of the material entering a silo and of the sorting of the material being easy to control. The remote control may be electrically operated, or mechanically by means of cable wires, for instance. A separate power source may be connected to the distributor with the purpose of adjusting the position of this.

In a typical apparatus of the invention, the discharger is disposed such that, when material is removed from the silo or the like, the discharger transfers material towards the centre of the silo or the like. Then the material to be discharged is removed from the silo or the like through an opening in the vicinity of the vertical axis of the apparatus of the invention. The material will then be removed as evenly as possible from the entire surface area of the silo or a similar store, or from a desired sector of the store.

In one embodiment of the invention in question, the discharger located at the bottom or in the vicinity of the bottom of a silo or a similar store is a screw discharger. A screw discharger is suitable for the transfer of several different solid materials, such as charcoal and other solid fuels.

A typical apparatus of the invention is made at least partly of metal or plastic, and thus the device can be manufactured from the material most suitable for its purpose of use.

The invention will be described in detail below with reference to the accompanying drawing.

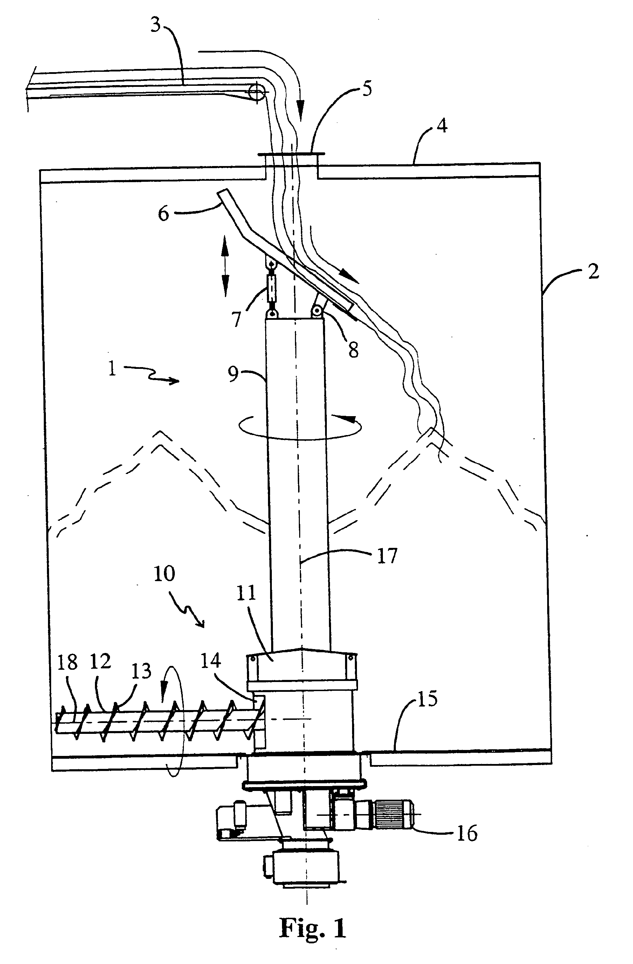

Figure 1 is a schematic view of the apparatus of the invention mounted in operative position in a storage silo shown in a cross-sectional elevational projection.

Figure 1 shows a preferred apparatus 1 of the invention mounted in a storage silo 2 for solid material. Solid material is brought to the silo 2 with a conveyor 3. The material drops into the silo 2 through a through-opening 5 in the roof 4 of the storage silo. The falling material hits the distributor 6, which deflects the falling material. The distributor 6 is supported on the post 9 by a support rod 7 and a hinge 8. The lower end of the post 9 is supported by the discharger 10, more particularly by the discharger frame 11. The discharger frame 11 is connected with the screw portion 12 of the discharger, on whose surface a thread 13 is fastened. In the discharger frame 11, in the vicinity of the fastening point of the screw portion 12, an opening 14 is provided, which constitutes the beginning of a connecting pipe, through which the stored material is discharged from the silo 2 through the silo bottom 15. The figure shows an electric motor 16 below the silo bottom 15, the motor acting as a power source as the apparatus 1 is rotated about its vertical axis 17.

In the preferred example of the invention illustrated in figure 1, the solid material brought into the silo 2 having a circular horizontal cross-section and a flat bottom is guided to the desired location in the silo 2 with the distributor 6, which is formed from a bent plate. The direction of the material flow is controlled in the radial direction of the bottom of the silo 2 by a vertical shift of the position of the distributor 6 by adjusting the length of the support rod 7. The hinge 8 swings to the required extent as the distributor 6 is inclined. The longer the distance over which the support rod 7 is adjusted, the larger the angle between the distributor 7 and the horizontal plane, and the closer to the centre of the silo 2 the material will be guided. Accordingly, by shortening the support rod 7, the material will be guided to the vicinity of the edges of the silo 2. The exact positions of the support rod 7 required for guiding the material flow depend on the incoming material, its properties and the volume of the material flow. The guiding of the material in the peripheral direction of the silo bottom is performed by turning the entire apparatus 1 about its vertical axis 17 by means of the electric motor 16 and power transmission means. As the electric motor 16 turns the frame 11 of the discharger 10, the post 9 supported by the frame and the distributor 6 supported by the post 9 will turn along with the discharger frame. The power transmission means mentioned above are known *per se,* and are consequently not shown in the figure. Both the adjustment of the position of the material distributor 6, the rotation of the entire apparatus 1, and the actuation of the discharger 10 are disposed to be guided by remote control from outside the silo 2 or the like.

As the solid material within the silo 2 is discharged by means of the preferred apparatus shown in figure 1, the discharger screw 12 is turned about its longitudinal axis 18, and then the screw thread 13 pushes the material to be discharged towards the centre of the silo 2 and the opening 14 in the discharger frame 11. In the normal operating position, the discharger 10 rotates about the vertical axis 17 of the apparatus 1 on the bottom 15 of the silo 2, removing material evenly from the entire area of the bottom 15 through the opening 14. The material is guided from the opening 14 by means of pipes, conveyors or other suitable means through the silo bottom 15 and further out of the silo 2. The figure does not show parts not directly connected with the present invention, for instance power sources or other means for rotating the discharger screw 12 about its longitudinal axis 18. The figure does not either show the means for removing material from the silo 2, for instance any pipes or conveyors called for in some cases.

It is obvious to a person skilled in the art that the invention is not restricted exclusively to the example given above, but may vary within the scope of the claims presented below. The apparatus of the invention may for instance be located in some other kind of store than a silo, and the position of the distributor 6 and/or post 9 relative to the position of the longitudinal axis 18 of the discharger screw can be horizontally adjusted as well. The discharger 10 and the distributor 6 may be adapted to rotate at different speeds about the vertical axis 17. The distributor 6 may be different from the bent plate shown in the example of figure 1, being for instance shaped as a tube or a trough. The material may be fed into the silo 2 for instance by being emptied directly from a lorry, and the opening 5 may be located elsewhere than directly above the apparatus 1, provided that the material is guided from the opening 5 to the distributor 6. The discharger 10 is not necessarily a screw discharger, it may be for instance a chain discharger, and the material outlet 14 from the silo 2 may be located somewhere else than in the discharger frame 11, for instance in the silo bottom 15, in the vicinity of the centre of the silo 2. The dimensions of the apparatus 1 and the other parts are given in figure 1 by way of example, the apparatus being suitable for use in various sizes and in various types of stores.

## Claims

1. An arrangement for even distribution of fuels or other solid materials and for preventing their sorting in a silo (2) or a similar store, and for removing said material from the silo (2) or a similar store, the arrangement comprising a roof (4) of the store and an opening (5) in the roof through which the material entering the silo or a similar store is arranged to enter and an apparatus (1) comprising
- a distributor (6) of incoming material, for even distribution of a material entering a silo (2) or a similar store,
- a discharger (10) disposed to rotate about a vertical axis (17) substantially in the horizontal plane at the bottom (15) or in the vicinity of the bottom (15) of a silo (2) or a similar store for discharging material from the silo (2) or the like,
whereby the distributor (6) for incoming material is fastened to the discharger (10), for instance to its frame (11), by means of a post (9) or the like, the distributor (6) of incoming material is a distributing pipe, trough or plate, through which the material entering a silo or a similar store is arranged to be guided, and the opening (5) is located directly above the apparatus (1)
**characterised in that**
- the post (9) or the like is supported merely to the discharger (10).

2. An arrangement as defined in claim 1, **characterised in that** the angle between the horizontal projections of the distributor (6) and of the discharger (10) remains constant, i.e. said distributor (6) and discharger (10) are adapted to rotate at the same speed about the vertical axis (17).

3. An arrangement as defined in claim 1 or 2, **characterised in that** the material distributor (6) is adapted to guide substantially all of the incoming material into direction other than that of the discharger (10).

4. An arrangement as defined in any of the preceding claims, **characterised in that** the material distributor (6) is adapted to guide a substantial portion of the incoming material into a given direction, preferably over a less than 90 ° sector of the horizontal cross-sectional area of the silo (2) or the like.

5. An arrangement as defined in any of the preceding claims, **characterised in that** the position of the material distributor (6) is adapted to be adjusted
- in the horizontal plane about the vertical axis (17) of the apparatus (1) relative to the position of the discharger (10), and/or
- in the vertical plane by lifting or lowering the distributor (6) and/or inclining the distributor (6) relative to the bottom (15) of the silo (2) or a similar store,
to allow for control of the direction into which the distributor (6) guides the incoming material.

6. An arrangement as defined in any of the preceding claims, **characterised in that** the actuation of the entire apparatus (1) or of some of the parts of the apparatus (1), such as the adjustment of the position of the material distributor (6) and the activation and inactivation of the discharger (10), have been disposed to be guided by remote control from outside the silo (2) or the like.

7. An arrangement as defined in any of the preceding claims, **characterised in that** the discharger (10) is disposed such that, during removal of material from the silo (2) or the like, the discharger (10) transfers material towards the centre of the silo (2) or a similar store, so that the material to be removed is discharged from the silo (2) or the like through an opening (14) in the vicinity of the centre of the silo (2).

8. An arrangement as defined in any of the preceding claims, **characterised in that** the discharger (10) is a screw discharger.

9. An arrangement as defined in any of the preceding claims, **characterised in that** the apparatus (1) is made at least partly of metal or plastic.

10. Method in a storage silo (2) for solid material, which method has following steps:
- solid material is brought to the silo (2),
- the material is dropped into the silo (2) through an opening (5) in the roof (4) of the storage silo,
- the falling material hits a distributor (6), which is supported on a post (9), the lower end of which is supported by a discharger (10),
- the distributor (6) deflects the falling material,
- the discharger (10) is rotated about a vertical axis (17) substantially in the horizontal plane at the bottom (15) or in the vicinity of the bottom (15) of the silo (2),
- the material is discharged from the silo (2) by the discharger (10)
- the post (9) is supported merely on the discharger (10),
- the distributor (6) is a distributing pipe, trough or plate, through which the material entering a silo or a similar store is guided,
- the opening (5) is located directly above the apparatus (1).

## Patentansprüche

1. Anordnung zur gleichmäßigen Verteilung von Brennstoffen oder anderen festen Materialien und zur Vermeidung ihrer Sortierung in einem Silo (2) oder einem ähnlichen Speicher und zur Entfernung des Materials aus dem Silo (2) oder einem ähnlichen Speicher, wobei die Anordnung umfasst: eine Decke (4) des Speichers und eine Öffnung (5) in der Decke, welche dazu eingerichtet ist, dass das in das Silo oder einen ähnlichen Speicher eintretende Material durch sie eintritt, und eine Vorrichtung (1) welche umfasst:
- eine Verteilvorrichtung (6) für eintreffendes Material, zur gleichmäßigen Verteilung eines in ein Silo (2) oder einen ähnlichen Speicher eintretenden Materials,
- eine Entladevorrichtung (10), welche dazu angeordnet ist, um eine vertikale Achse (17) im Wesentlichen in der horizontalen Ebene an dem Boden (15) oder in der Nähe des Bodens (15) eines Silos (2) oder eines ähnlichen Speichers zu rotieren, um Material aus dem Silo (2) oder dergleichen zu entladen,
wobei die Verteilvorrichtung (6) für eintreffendes Material an der Entladevorrichtung (10), beispielsweise an ihrem Gestell (11), mittels einer Säule (9) oder dergleichen befestigt ist, wobei die Verteilvorrichtung (6) für eintreffendes Material ein Verteilerrohr, eine Verteilerwanne oder eine Verteilerplatte ist, durch welches bzw. welche das in ein Silo oder einen ähnlichen Speicher eintretende Material eingerichtet ist geführt zu werden, und wobei die Öffnung (5) sich direkt über der Vorrichtung (1) befindet,
**dadurch gekennzeichnet, dass**
- die Säule (9) oder dergleichen lediglich an der Entladevorrichtung (10) gehalten ist.

2. Anordnung nach Anspruch 1, **dadurch gekennzeichnet, dass** der Winkel zwischen den horizontalen Projektionen der Verteilvorrichtung (6) und der Entladevorrichtung (10) konstant bleibt, d.h. die Verteilvorrichtung (6) und Entladevorrichtung (10) dazu ausgestaltet sind, mit derselben Geschwindigkeit um die vertikale Achse (17) zu rotieren.

3. Anordnung nach Anspruch 1 oder 2, **dadurch gekennzeichnet, dass** die Materialverteilvorrichtung (6) dazu ausgestaltet ist, im Wesentlichen das gesamte eintreffende Material in eine andere Richtung als diejenige der Entladevorrichtung (10) zu führen.

4. Anordnung nach einem der vorhergehenden Ansprüche, **dadurch gekennzeichnet, dass** die Materialverteilvorrichtung (6) dazu ausgestaltet ist, einen wesentlichen Teil des eintreffenden Materials in eine gegebene Richtung zu führen, vorzugsweise über einen Sektor von weniger als 90° der horizontalen Querschnittsfläche des Silos (2) oder dergleichen.

5. Anordnung nach einem der vorhergehenden Ansprüche, **dadurch gekennzeichnet, dass** die Position der Materialverteilvorrichtung (6) dazu ausgestaltet ist, eingestellt zu werden
- in der horizontalen Ebene um die vertikale Achse (17) der Vorrichtung (1) relativ zu der Position der Entladevorrichtung (10), und/oder
- in der vertikalen Ebene, indem relativ zu dem Boden (15) des Silos (2) oder eines ähnlichen Speichers die Verteilvorrichtung (6) angehoben oder abgesenkt wird und/oder die Verteilvorrichtung (6) geneigt wird,
um eine Steuerung der Richtung zu ermöglichen, in welche die Verteilvorrichtung (6) das eintreffende Material führt.

6. Anordnung nach einem der vorhergehenden Ansprüche, **dadurch gekennzeichnet, dass** eine Betätigung der gesamten Vorrichtung (1) oder von einigen der Teile der Vorrichtung (1), wie zum Beispiel die Einstellung der Position der Materialverteilvorrichtung (6) und die Aktivierung oder Deaktivierung der Entladevorrichtung (10) eingerichtet sind, durch Fernsteuerung von außerhalb des Silos (2) oder dergleichen geleitet zu werden.

7. Anordnung nach einem der vorhergehenden Ansprüche, **dadurch gekennzeichnet, dass** die Entladevorrichtung (10) derart angeordnet ist, dass während eines Entfernens von Material aus dem Silo (2) oder dergleichen die Entladevorrichtung (10) Material in Richtung der Mitte des Silos (2) oder eines ähnlichen Speichers überführt, so dass das zu entfernende Material durch eine Öffnung (14) in der Nähe der Mitte des Silos (2) aus dem Silo (2) oder dergleichen entladen wird.

8. Anordnung nach einem der vorhergehenden Ansprüche, **dadurch gekennzeichnet, dass** die Entladevorrichtung (10) eine Schraubenentladevorrichtung ist.

9. Anordnung nach einem der vorhergehenden Ansprüche, **dadurch gekennzeichnet, dass** die Vorrichtung (1) wenigstens teilweise aus Metall oder Kunststoff hergestellt ist.

10. Verfahren in einem Speichersilo (2) für festes Material,
wobei das Verfahren die folgenden Schritte aufweist:
- festes Material wird zu dem Silo (2) gebracht,
- das Material wird durch eine Öffnung (5) in der Decke (4) des Speichersilos in das Silo (2) fallengelassen,
- das fallende Material trifft auf eine Verteilvorrichtung (6), welche an einer Säule (9) gehalten ist, deren unteres Ende von einer Entladevorrichtung (10) gehalten ist,
- die Verteilvorrichtung (6) lenkt das fallende Material ab,
- die Entladevorrichtung (10) wird um eine vertikale Achse (17) im Wesentlichen in der horizontalen Ebene an dem Boden (15) oder in der Nähe des Bodens (15) des Silos (2) rotiert,
- das Material wird durch die Entladevorrichtung (10) aus dem Silo (2) entladen,
- die Säule (9) wird lediglich an der Entladevorrichtung (10) gehalten,
- die Verteilvorrichtung (6) ist ein Verteilerrohr, eine Verteilerwanne oder eine Verteilerplatte, durch welches bzw. welche das in ein Silo oder ähnlichen Speicher eintretende Material geführt wird,
- die Öffnung (5) befindet sich direkt oberhalb der Vorrichtung (1).

## Revendications

1. Dispositif destiné à une distribution régulière de combustibles ou autres matériaux solides et servant à éviter leur tri dans un silo (2) ou dans un lieu de stockage similaire, et servant à éliminer ledit matériau du silo (2) ou du lieu de stockage similaire, le dispositif comportant un toit (4) du lieu de stockage et une ouverture (5) dans le toit à travers laquelle le matériau entrant dans le silo ou dans un lieu de stockage similaire est disposé pour entrer et un appareil (1) comprenant
- un distributeur (6) de matériau entrant, pour une distribution régulière d'un matériau entrant dans un silo (2) ou dans un lieu de stockage similaire,
- un appareil de déchargement (10) disposé pour tourner autour d'un axe vertical (17) essentiellement dans le plan horizontal au fond (15) ou au voisinage du fond (15) d'un silo (2) ou d'un lieu de stockage similaire pour décharger le matériau du silo (2) ou analogue,
de sorte que le distributeur (6) destiné au matériau entrant est fixé au dispositif de déchargement (10), par exemple, à son bâti (11), au moyen d'un montant (9) ou analogue, le distributeur (6) de matériau entrant est un tuyau, une auge ou une plaque de distribution, à travers lequel le matériau entrant dans un silo ou dans un lieu de stockage similaire est agencé pour être guidé, et l'ouverture (5) est située directement au-dessus de l' appareil (1),
**caractérisé en ce que**
le montant (9) ou analogue est supporté simplement par le dispositif de déchargement (10).

2. Dispositif selon la revendication 1, **caractérisé en ce que** l'angle formé entre les projections horizontales du distributeur (6) et du dispositif de déchargement (10) reste constant, c'est à dire que ledit distributeur (6) et ledit dispositif de déchargement (10) sont adaptés pour tourner à la même vitesse autour de l'axe vertical (17).

3. Dispositif selon la revendication 1 ou 2, **caractérisé en ce que** le distributeur de matériau (6) est adapté pour guider essentiellement la totalité du matériau entrant dans une direction autre que celle du dispositif de déchargement (10).

4. Dispositif selon l'une quelconque des revendications précédentes, **caractérisé en ce que** le distributeur de matériau (6) est adapté pour guider une partie importante du matériau entrant dans une direction donnée, de préférence sur un secteur inférieur à 90° de la surface de section transversale horizontale du silo (2) ou analogue.

5. Dispositif selon l'une quelconque des revendications précédentes, **caractérisé en ce que** la position du distributeur de matériau (6) est adaptée pour être ajustée
- dans le plan horizontal autour de l'axe vertical (17) de l'appareil (1) par rapport à la position du dispositif de déchargement (10), et/ou
- dans le plan vertical en élevant ou en abaissant le distributeur (6) et/ou en inclinant le distributeur (6) par rapport au fond (15) du silo (2) ou d'un lieu de stockage similaire,
en vue de permettre la commande de la direction dans laquelle le distributeur (6) oriente le matériau entrant.

6. Dispositif selon l'une quelconque des revendications précédentes, **caractérisé en ce que** la mise en action de l'appareil tout entier (1) ou de certaines des parties de l'appareil (1), telles que le réglage de la position du distributeur de matériau (6) et l'activation ou la désactivation du dispositif de déchargement (10), ont été disposées pour être guidées par une commande à distance à partir de l'extérieur du silo (2) ou analogue.

7. Dispositif selon l'une quelconque des revendications précédentes, **caractérisé en ce que** le dispositif de déchargement (10) est disposé de telle manière que, pendant le déchargement du matériau hors du silo (2) ou du lieu similaire, le dispositif de déchargement (10) transfère le matériau vers le centre du silo (2) ou du lieu de stockage similaire, de sorte que le matériau à éliminer est déchargé à partir du silo (2) ou analogue à travers une ouverture (14) au voisinage du centre du silo (2).

8. Dispositif selon l'une quelconque des revendications précédentes, **caractérisé en ce que** le dispositif de déchargement (10) est un déchargeur à vis.

9. Dispositif selon l'une quelconque des revendications précédentes, **caractérisé en ce que** l'appareil (1) est fait, au moins en partie, de métal ou de matière plastique.

10. Procédé dans un silo de stockage (2) destiné à un matériau solide, lequel procédé comporte les étapes suivantes :
- le matériau solide est amené vers le silo (2),
- le matériau tombe dans le silo (2) à travers une ouverture (5) formée dans le toit (4) du silo de stockage,
- le matériau qui tombe heurte un distributeur (6), qui est supporté sur un montant (9), dont l'extrémité inférieure est supportée par un dispositif de déchargement (10),
- le distributeur (6) dévie le matériau qui tombe,
- le dispositif de déchargement (10) tourne autour d'un axe vertical (17) essentiellement dans le plan horizontal au niveau du fond (15) ou au voisinage du fond (15) du silo (2),
- le matériau est déchargé du silo (2) par le dispositif de déchargement (10),
- le montant (9) est supporté simplement sur le dispositif de déchargement (10),
- le distributeur (6) est un tuyau, une auge ou une plaque de distribution, à travers lequel le matériau entrant dans un silo ou dans un lieu de stockage similaire est guidé,
- l'ouverture (5) est située directement au-dessus de l'appareil (1).
